# EUROPEAN PATENT APPLICATION

(11) **EP 4 683 391 A1**
(43) Date of publication of application: **21.01.2026**
(21) Application number: 23926785.9
(22) Date of filing: 15.03.2023
(51) Int. Cl.: H04W 40/22, H04W 76/50

(54) **RELAY SELECTION METHODS AND APPARATUSES, AND STORAGE MEDIUM, TERMINAL AND NETWORK DEVICE**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2023/081747
(87) International publication number: WO 2024/187430

(57) **Abstract**

Relay selection methods and apparatuses, a storage medium, a terminal, and a network device. A relay selection method comprises: determining whether a second terminal supports the transmission of data of a first service, wherein the first service is an emergency service, and the second terminal is a relay UE in relay connection with a first terminal. In the present application, whether a second terminal supports the transmission of data of a first service is determined, such that the accuracy of the selection of a relay device can be improved.

## Description

### TECHNICAL FIELD

The disclosure relates to the field of communication technologies, and in particular relates to a relay selection method, an apparatus, a storage medium, a terminal and a network device.

### BACKGROUND

To support direct communication between user equipments (UEs), a sidelink (SL) communication mode has been introduced. The SL is sometimes referred to as a secondary link or a direct link. A UE can communicate directly with a network device. When a UE is beyond the network coverage of a network device, it can also achieve relay communication with a base station through another UE that serves as a relay node.

In relay communication, a UE that is not directly connected to the network device is called a remote UE, and a UE that acts as the relay node is called a relay UE. How to select a relay UE is an urgent technical issue to be addressed.

### SUMMARY

To address the issues existing in the related art, the present disclosure provides a relay selection method, an apparatus, a storage medium, a terminal, and a network device.

According to a first aspect of embodiments of the disclosure, a relay selection method is provided, which is performed by a first terminal and includes:
determining whether a second terminal supports transmitting data of a first service, in which the first service is an emergency service, and the second terminal is a relay UE in relay connection with the first terminal.

According to a second aspect of embodiments of the disclosure, a relay selection method is provided, which is performed by a second terminal and includes:
sending first indication information to a first terminal, in which the first indication information is used to determine whether the second terminal supports transmitting data of a first service, the first service is an emergency service, and the first terminal is a remote UE in relay connection with the second terminal.

According to a third aspect of embodiments of the disclosure, a relay selection method is provided, which is performed by a network device and includes:
sending second indication information to a first terminal, in which the second indication information is used to determine whether to send a first ID of a second terminal not supporting emergency service transmission to the network device.

According to a fourth aspect of embodiments of the disclosure, a relay selection apparatus is provided and includes:
a determination module, configured to determine whether a second terminal supports transmitting data of a first service, in which the first service is an emergency service, and the second terminal is a relay UE in relay connection with a first terminal.

According to a fifth aspect of embodiments of the disclosure, a relay selection apparatus is provided and includes:
a first sending module, configured to send first indication information to a first terminal, in which the first indication information is used to determine whether a second terminal supports transmitting data of a first service, the first service is an emergency service, and the first terminal is a remote UE in relay connection with the second terminal.

According to a sixth aspect of embodiments of the disclosure, a relay selection apparatus is provided and includes:
a second sending module, configured to send second indication information to a first terminal, in which the second indication information is used to determine whether to send a first ID of a second terminal not supporting emergency service transmission to a network device

According to a seventh aspect of embodiments of the disclosure, a terminal is provided and includes:
a processor; and
a memory for storing executable instructions of the processor;
in which the processor is configured to execute the executable instructions to implement the relay selection method according to the first aspect or the second aspect of the disclosure.

According to an eighth aspect of embodiments of the disclosure, a network device is provided and includes:
a processor; and
a memory for storing executable instructions of the processor;
in which the processor is configured to execute the executable instructions to implement the relay selection method according to the third aspect of the disclosure.

According to a ninth aspect of embodiments of the disclosure, a computer-readable storage medium is provided, on which computer program instructions are stored. When the computer program instructions are executed by a processor, steps of the relay selection method provided in the first aspect, the second aspect or the third aspect of the disclosure are implemented.

The technical solutions provided by the embodiments of the disclosure may include the following beneficial effects: determining whether the second terminal supports transmitting the data of the first service, in which the first service may be the emergency service. This may prevent a failure of emergency service transmission, thereby improving a success rate of the emergency service transmission.

It should be understood that the above general description and the following detailed description are merely exemplary and explanatory, and shall not limit the disclosure.

### BRIEF DESCRIPTION OF THE DRAWINGS

The aforementioned and/or additional aspects and advantages of the disclosure will become apparent and easily understandable from the following description of embodiments in conjunction with accompanying drawings.
FIG. 1 is a diagram illustrating an application scenario to which a relay selection method is applicable according to an embodiment.
FIG. 2 is a flowchart of a relay selection method according to an embodiment.
FIG. 3 is a flowchart of a relay selection method according to another embodiment.
FIG. 4 is a flowchart of a relay selection method according to further another embodiment.
FIG. 5 is a flowchart of a relay selection method according to yet another embodiment.
FIG. 6 is a flowchart of a relay selection method according to yet another embodiment.
FIG. 7 is a flowchart of a relay selection method according to yet another embodiment.
FIG. 8 is a flowchart of a relay selection method according to yet another embodiment.
FIG. 9 is a flowchart of a relay selection method according to yet another embodiment.
FIG. 10 is a flowchart of a relay selection method according to yet another embodiment.
FIG. 11 is a flowchart of a relay selection method according to yet another embodiment.
FIG. 12 is a flowchart of a relay selection method according to yet another embodiment.
FIG. 13 is a flowchart of a relay selection method according to further another embodiment.
FIG. 14 is a flowchart of a relay selection method according to yet another embodiment.
FIG. 15 is a flowchart of a relay selection method according to yet another embodiment.
FIG. 16 is a flowchart of a relay selection method according to yet another embodiment.
FIG. 17 is a flowchart of a relay selection method according to yet another embodiment.
FIG. 18 is a flowchart of a relay selection method according to yet another embodiment.
FIG. 19 is a block diagram of a relay selection apparatus according to an embodiment.
FIG. 20 is a block diagram of a relay selection apparatus according to another embodiment.
FIG. 21 is a block diagram of a relay selection apparatus according to further another embodiment.
FIG. 22 is a block diagram of a terminal according to an embodiment.
FIG. 23 is a block diagram of a network device according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the example embodiments do not represent all implementations consistent with the disclosure. Instead, they are merely examples of apparatuses and methods consistent with some aspects of the disclosure as recited in the attached claims.

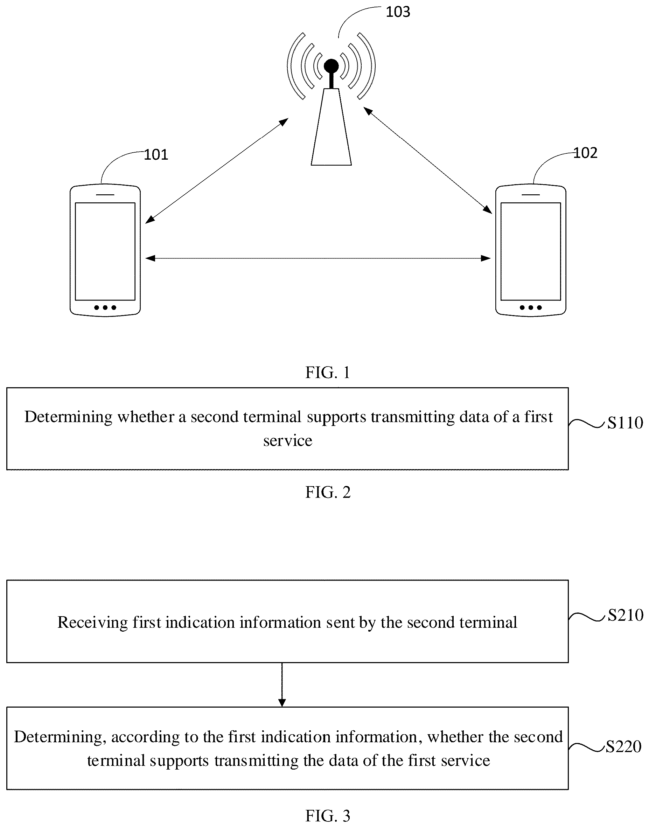

To facilitate understanding of embodiments of the disclosure, some terms used in the embodiments of the disclosure are explained below in conjunction with FIG. 1, for the convenience of those skilled in the art.

### 1) Terminal

In some embodiments, a first terminal 101 and a second terminal 102 are, for example, terminals, UEs, mobile stations (MSs), mobile terminals (MTs), mobile phones, wearable devices, Internet of Things (IoT) devices, vehicles with communication functions, intelligent vehicles, pads, computers with wireless transceiving functions, virtual reality (VR) terminals, augmented reality (AR) terminals, wireless terminals in industrial control, wireless terminals in self-driving, wireless terminals in remote medical surgery, wireless terminals in smart grid, wireless terminals in transportation safety, wireless terminals in smart city, and wireless terminals in smart home, but are not limited thereto.

In addition, the first terminal 101 and the second terminal 102 may be UEs or other terminal-side devices, such as mobile phones, tablet personal computers, laptop computers, personal digital assistants (PDAs), mobile internet devices (MIDs), wearable devices, intelligent vehicles, in-vehicle devices, or robots. It is worth noting that the disclosure does not limit the specific type of the terminal.

### 2) Network device

A network device 103 is also referred to as a radio access network device, which is a device that connects a terminal to a wireless network. The network device 103 may include an access network device, a core network device, and a device (such as a server) of a service provider, etc. For example, the network device 103 includes but is not limited to: a transmission reception points (TRP), a base station (e.g., next generation node B (gNB)), a radio network controller (RNC), a node B (NB), a base station controller (BSC), a base transceiver station (BTS), a home evolved NB (HeNB), a home NB (HNB), and a baseband unit (BBU), etc.

The network device 103 may be configured to provide a communication network and allocate uplink and downlink dynamic resources for the terminal, and may be a base station. The base station is an apparatus deployed in an access network to provide wireless communication functions for the terminal. The base station may be either the base station of a serving cell of the terminal or the base station of a cell adjacent to the serving cell of the terminal. Base stations may include various forms of macro base stations, micro base stations, relay stations, access points, TRPs, and so on. In systems adopting different wireless access technologies, the name of a device with base station functions may vary. In the 5G new radio (NR) system, the device may be called a next generation node B (gNodeB) or a gNB. With the evolution of communication technologies, the description for the term "base station" may change.

### 3) Sidelink (SL)

The SL may also be referred to as a side link or edge link, etc. The SL is configured for communication between terminals, including one-to-one SL communication and one-to-many SL communication. The one-to-one SL communication may include unicast, and the one-to-many SL communication includes broadcast, multicast, etc. For example, the broadcast may refer to communication with all terminals in a cell, and multicast may refer to communication with the terminal(s) in a communication group, where the communication group includes one or more terminals. The SL communication may include direct communication between two terminals, and may also include SL communication forwarded by a relay node.

### 4) PC5 Interface

The PC5 interface is an interface used for wireless communication between terminals, that is, one terminal communicates with another terminal via the PC5 interface. The SL between two terminals may communicate with each other via the PC5 interface.

### 5) Emergency Service

The emergency service refers to a service that a network provides a user with emergency assistance in a communication network, in a case where personal/public health and safety, life, or property are in danger. The emergency service may include an emergency call service, a commercial mobile alert service (CMAS), an earthquake and tsunami warning system (ETWS) service, etc.

For example, the emergency service may be an Internet protocol (IP) multimedia subsystem (IMS) emergency call service. The emergency service may also include services related to special fire alarms, police, public safety, and the like. Therefore, data of a first service may be data related to the emergency service.

In some embodiments, the emergency service may also be a service defined by a terminal.

To support direct communication between terminals, an SL communication mode is introduced, and an interface between terminals in the SL may be the PC5. The SL may support three transmission modes, which are unicast, multicast, and broadcast respectively.

As known from the above introduction, a terminal may not be directly connected to a base station, but may communicate with the base station via relay of another terminal. The terminal not connected to the base station may be referred to as a remote UE, and the terminal providing a relay function may be referred to as a relay UE. The remote UE and the relay UE may communicate via the SL, and this architecture may be referred to as a U2N (UE to network) relay.

The relay UE and the remote UE may discover each other via a discovery process. After the discovery process is initiated, the terminal may send or receive a discovery signal. The discovery signal may carry information such as a serving cell identifier (ID) of the terminal and an ID of the terminal.

In some embodiments, when the remote UE in a connected state moves out of network coverage, a path between the remote UE and the network device needs to be switched to a relay path. At this time, the remote UE may send a measurement report to the network device, and the measurement report may include an SL ID of the relay UE, the serving cell ID of the relay UE, and an SL channel quality between the remote UE and the relay UE, etc.

The network device may select a target relay UE based on a measurement result sent by the remote UE, and send configuration information to the target relay UE. The configuration information is used to establish a connection with the remote UE. On this basis, the network device may send a path switching instruction to the remote UE, and the path switching instruction may carry the ID of the target relay UE and related configurations. After receiving the path switching instruction, the remote UE may establish a connection with the network device via the target relay UE.

In some embodiments, the SL channel quality between the remote UE and the relay UE may be obtained by measuring an SL communication signal to get SL reference signal receiving power (SL-RSRP), or by measuring the discovery signal to get SL discovery reference signal receiving power (SD-RSRP). The SD-RSRP is the RSRP of the SL discovery signal, and the SL-RSRP is the RSRP of the SL communication signal. When there is SL communication between the remote UE and the relay UE, the SL-RSRP may be used for event evaluation.

When the remote UE has an emergency service to transmit via the relay UE, the measurement report sent by the remote UE usually only includes a measurement result of the relay UE and a target cell, making it impossible for the network device to clearly know whether the relay UE is able to transmit the emergency service. In this case, when the network device selects a relay UE not supporting emergency service transmission or is not suitable for emergency service transmission, the emergency service transmission will fail.

To solve the above issues, embodiments of the disclosure provide a relay selection method, an apparatus, a storage medium, a terminal, and a network device, so as to improve a reliability of the emergency service transmission.

The following describes an application scenario of a relay selection method according to an embodiment. As shown in FIG. 1, the application scenario includes the first terminal 101, the second terminal 102, and the network device 103. The first terminal 101 and the second terminal 102 may communicate via the PC5 interface using the SL. The network device 103 may communicate with the first terminal 101 or the second terminal 102 via an air interface (Uu interface) using uplink and downlink.

It is worth noting that in a network system shown in FIG. 1, the first terminal 101 and the second terminal 102 may communicate via an SL direct link. In other embodiments, the first terminal 101 and the second terminal 102 may also communicate via an SL indirect link. That is, the first terminal 101 and the second terminal 102 may communicate via at least one relay UE. In the embodiments of the disclosure, the first terminal 101 may be the remote UE, and the second terminal 102 may be the relay UE.

FIG. 2 is a flowchart illustrating a relay selection method according to some embodiments. As shown in FIG. 2, the relay selection method may be performed by a first terminal and includes the following steps.

In step S110, whether a second terminal supports transmitting data of a first service is determined.

In the embodiments of the disclosure, the first service may be an emergency service. In addition, the first terminal may be the remote UE, and the second terminal may be the relay UE in relay connection with the first terminal. When the first terminal is far away from network coverage, a communication path may be switched to a relay path. At this time, the first terminal may select a qualified second terminal to connect with a network device.

In detail, the first terminal may determine whether the relay UE supports transmitting the data of the first service. For example, the first terminal may determine whether the relay UE supports emergency service transmission. In a case where it is determined that the relay UE supports the emergency service transmission, the first terminal may send indication information to the network device to inform the network device that the relay UE may support the emergency service transmission. In some embodiments, in a case where it is determined that the relay UE does not support the emergency service transmission, the first terminal may also send indication information to the network device to inform the network device that the relay UE does not support the emergency service transmission. For example, the relay UE may be the second terminal.

Embodiments of the disclosure specify that the first terminal may determine whether the relay UE supports transmitting the data of the first service, in which the first service may be the emergency service. This may prevent a failure of emergency service transmission, thereby improving a success rate of the emergency service transmission.

FIG. 3 is a flowchart illustrating a relay selection method according to some other embodiments. As shown in FIG. 3, the relay selection method can be performed by a first terminal and includes the following steps.

In step S210, first indication information sent by a second terminal is determined.

In some embodiments, the first terminal may receive the first indication information sent by the second terminal, in which the first indication information may directly indicate whether the second terminal supports transmitting data of the first service. In addition, the first indication information may be information sent by the second terminal to the first terminal during a process of establishing relay communication or after the relay communication is established.

As an example, the first indication information includes two fields including a first filed and a second field. The first field is configured to indicate that the second terminal supports emergency service transmission, and the second field is configured to indicate that the second terminal does not support the emergency service transmission. Through values of the first field and the second field, the first terminal may determine whether the second terminal supports emergency service transmission.

As another example, when the value of the first indication information is 1, it indicates that the second terminal supports the emergency service transmission. When the value of the first indication information is 0, it indicates that the second terminal does not support the emergency service transmission.

In step S220, it is determined, according to the first indication information, whether the second terminal supports transmitting data of the first service.

In some embodiments, after receiving the first indication information, the first terminal may determine, according to the first indication information, whether the second terminal supports the data of the first service.

As an example, when the first indication information indicates that the second terminal supports the emergency service transmission, the first terminal may determine that the second terminal supports transmitting the data of the first service. For example, when the value of the first field for indicating the emergency service in the first indication information is 1 and the value of the second field is 0, it indicates that the second terminal supports the emergency service transmission.

As another example, when the first indication information indicates that the second terminal does not support the emergency service transmission, the first terminal may determine that the second terminal does not support transmitting the data of the first service. For example, when the value of the first field for indicating the emergency service in the first indication information is 0 and the value of the second field is 1, it indicates that the second terminal does not support the emergency service transmission.

In the embodiments of the disclosure, the first indication information may be carried in a discovery message or a direct communication request (DCR) message.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the application specify that the first terminal may receive the first indication information sent by the second terminal, and determine, based on the first indication information, whether the second terminal supports transmitting the data of the first service. This may not only avoid a failure for relay selection, but also enable simple and effective relay selection.

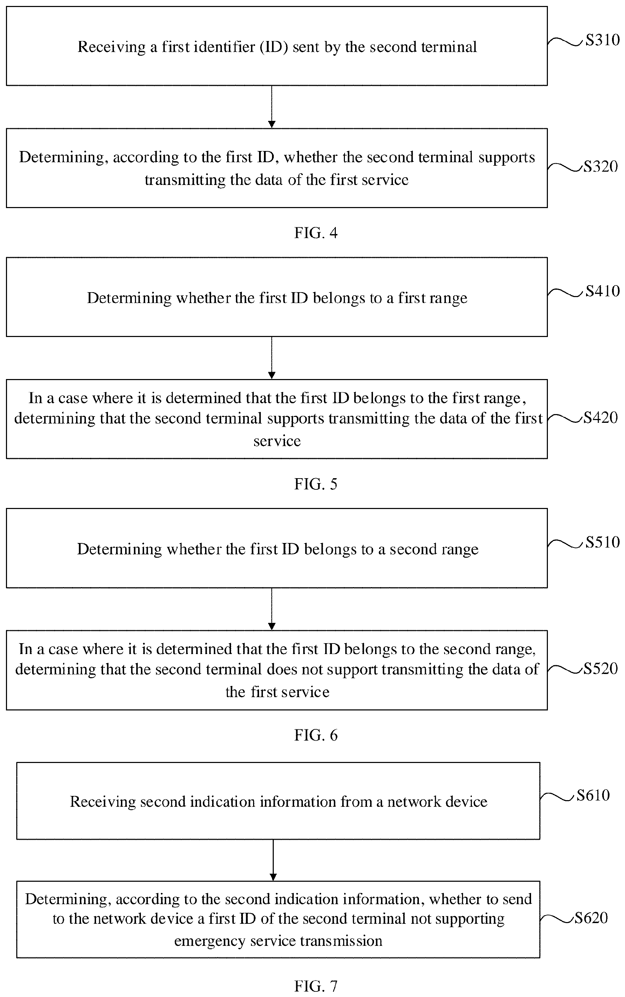

FIG. 4 is a flowchart illustrating a relay selection method according to some other embodiments. As shown in FIG. 4, the relay selection method may be performed by a first terminal and includes the following steps.

In step S310, a first ID sent by a second terminal is received.

In some embodiments, the first terminal may receive the first ID from the second terminal. The first ID sent by the second terminal may be an SL ID of the second terminal, which may also be referred to as an ID of the relay UE. In addition, the SL ID of the second terminal may be an ID of an SL between the first terminal and the second terminal. For example, the first ID of the second terminal may change according to a difference in services between the second terminal and the first terminal. In addition, the SL ID of the second terminal may be an SL layer 2 address.

In step S320, it is determined, according to the first ID, whether the second terminal supports transmitting data of a first service.

As an optional manner, after receiving the first ID sent by the second terminal, the first terminal may determine, according to the first ID, whether the second terminal supports transmitting the data of the first service. Specifically, the first terminal may determine whether the first ID of the second terminal satisfies a first condition. When it is determined that the first ID satisfies the first condition, it is determined that the second terminal supports transmitting the data of the first service. In some embodiments, when it is determined that the first ID does not satisfy the first condition, it is determined that the second terminal does not support transmitting the data of the first service.

As an example, determining whether the first ID satisfies the first condition may be determining whether the first ID is within a preset range. When it is determined that the first ID is within the preset range, it is determined that the second terminal supports the emergency service transmission. In some embodiments, when it is determined that the first ID is not within the preset range, it is determined that the second terminal does not support the emergency service transmission.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that the first terminal may receive the first ID sent by the second terminal, and determine, based on the first ID, whether the second terminal supports transmitting the data of the first service. This may not only reduce a failure rate of relay selection, but also improve an accuracy of the relay selection.

FIG. 5 is a flowchart illustrating a relay selection method according to yet other embodiments. As shown in FIG. 5, the relay selection method may be performed by a first terminal and includes the following steps.

In step S410, it is determined whether a first ID belongs to a first range.

In some implementation manners, after receiving the first ID sent by a second terminal, the first terminal may determine whether the first ID belongs to the first range. The first range may be predefined by a protocol before the first terminal leaves the factory, and in this case, the first range may be fixed.

In some embodiments, the first range may also be sent by a network device to the first terminal. That is, before determining whether the first ID belongs to the first range, the first terminal may first receive the first range from the network device. On this basis, it is determined whether the first ID belongs to the first range, and the first range at this time may change according to different services and different second terminals.

In step S420, in a case where it is determined that the first ID belongs to the first range, it is determined that the second terminal supports transmitting data of the first service.

As an optional manner, in a case where it is determined that the first ID belongs to the first range, the first terminal may determine that the second terminal supports transmitting the data of the first service; otherwise, in a case where it is determined that the first ID does not belong to the first range, it is determined that the second terminal does not support transmitting the data of the first service.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that the first terminal may receive the first ID sent by the second terminal, and in a case where it is determined that the first ID belongs to the first range, the first terminal may determine that the second terminal supports transmitting the data of the first service. This enables more accurate selection of the relay UE.

FIG. 6 is a flowchart illustrating a relay selection method according to yet other embodiments. As shown in FIG. 6, the relay selection method may be performed by a first terminal and includes the following steps.

In step S510, it is determined whether a first ID belongs to a second range.

In some embodiments, after receiving the first ID sent by a second terminal, the first terminal may determine whether the first ID belongs to the second range. The second range may be predefined by a protocol before the first terminal leaves the factory, and in this case, the second range may be fixed.

In some embodiments, the second range may also be sent by the network device to the first terminal. That is, before determining whether the first ID belongs to the second range, the first terminal may first receive the second range from the network device. On this basis, it is determined whether the first ID belongs to the second range, and the second range at this time may change according to different services and different second terminals.

In step S520, in a case where it is determined that the first ID belongs to the second range, it is determined that the second terminal does not support transmitting data of the first service.

As an optional manner, in a case where it is determined that the first ID belongs to the second range, the first terminal may determine that the second terminal does not support transmitting the data of the first service; otherwise, in a case where it is determined that the first ID does not belong to the second range, it is determined that the second terminal supports transmitting the data of the first service.

It should be noted that the first range and the second range in the embodiments of the disclosure may be two non-overlapping ranges. That is, when the second terminal supports emergency service transmission, the correspondingly configured first ID may fall within the first range. On the contrary, when the second terminal does not support the emergency service transmission, the correspondingly configured first ID may fall within the second range. The specific values of the first range and the second range are not explicitly limited herein and may be selected according to actual circumstances.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that the first terminal may receive the first ID sent by the second terminal, and in a case where it is determined that the first ID belongs to the second range, the first terminal may determine that the second terminal does not support transmitting the data of the first service. This avoids the failure of emergency service transmission.

FIG. 7 is a flowchart illustrating a relay selection method according to yet other embodiments. As shown in FIG. 7, the relay selection method can be applied to the first terminal and includes the following steps.

In step S610, second indication information is received from a network device.

In some embodiments, the first terminal may receive the second indication information from the network device, where the second indication information may indicate whether the first terminal is to send to the network device a first ID of a second terminal not supporting emergency service transmission.

As an example, the second indication information includes two fields including a first filed and a second field. The first field is configured to indicate that the first ID of the second terminal not supporting the emergency service transmission is sent to the network device. The second field is configured to indicate that it is not necessary to send to the network device the first ID of the second terminal not supporting the emergency service transmission. Through the values of the first field and the second field, the first terminal may determine whether to send to the network device the first ID of the second terminal not supporting the emergency service transmission.

As another example, in a case where the value of the second indication information is 1, it indicates that the first ID of the second terminal not supporting the emergency service transmission is to be sent to the network device. In a case where the value of the second indication information is 0, it indicates that there is no need to send to the network device the first ID of the second terminal not supporting the emergency service transmission.

In step S620, it is determined, according to the second indication information, whether to send to the network device the first ID of the second terminal not supporting the emergency service transmission.

In some embodiments, after receiving the second indication information from the network device, the first terminal may determine, according to the second indication information, whether to send to the network device the first ID of the second terminal not supporting the emergency service transmission.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that the first terminal may receive the second indication information from the network device, and may determine, according to the second indication information, whether to send to the network device the first ID of the second terminal not supporting the emergency service transmission, which may avoid the failure of emergency service transmission.

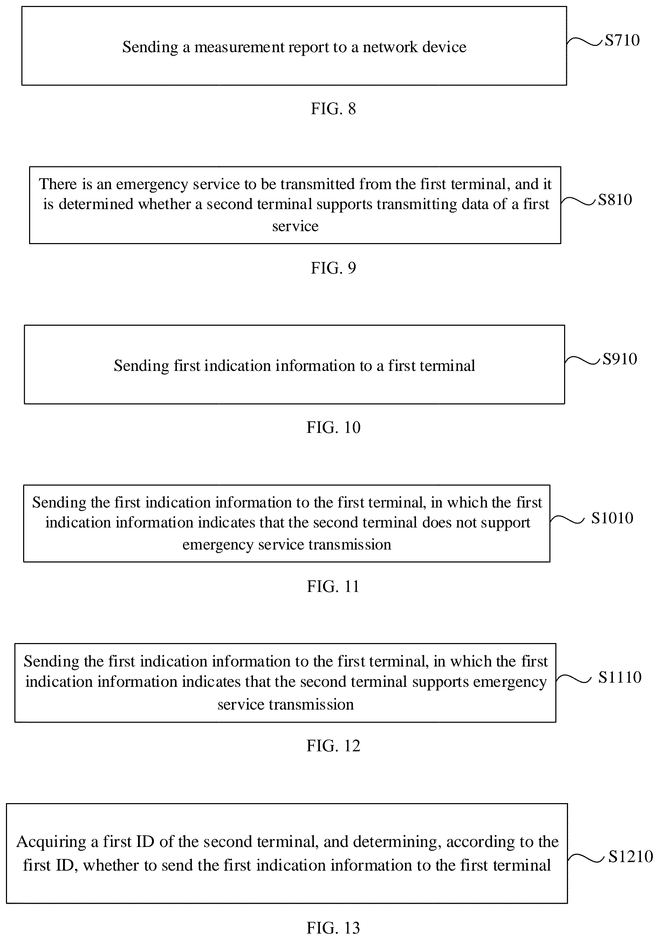

FIG. 8 is a flowchart illustrating a relay selection method according to yet other embodiments. As shown in FIG. 8, the relay selection method may be performed by a first terminal and includes the following steps.

In step S710, a measurement report is sent to a network device.

In some embodiments, the first terminal may send the measurement report to the network device, and the measurement report may carry a first ID of a second terminal supporting emergency service transmission. For example, the first terminal may send to the network device the first ID of the second terminal supporting the emergency service transmission via the measurement report.

In other words, the first terminal may send the measurement report to the network device, and the measurement report may not include the first ID of the second terminal not supporting the emergency service transmission-namely, the measurement report may not carry the first ID of the second terminal not supporting the emergency service transmission, but only carry the first ID of the second terminal supporting the emergency service transmission. For example, if the second terminal 1 supports the emergency service transmission while the second terminal 2 does not support the emergency service transmission, in this case, the first terminal may only send the first ID of the second terminal 1 to the network device via the measurement report.

It is worth noting that when sending the measurement report carrying the first ID of the second terminal supporting the emergency service transmission to the network device, the first terminal may also send third indication information to the network device, and the third indication information may indicate that the second terminal supports the emergency service transmission. In other words, the measurement report reported by the first terminal to the network device may not only include the first ID of the second terminal, but also include the third indication information for indicating that the second terminal supports the emergency service transmission.

In some embodiments, the measurement report may further be used to carry the first ID of the second terminal not supporting the emergency service transmission and fourth indication information indicating that the second terminal does not support the emergency service transmission. For example, if the second terminal 1 supports the emergency service transmission while the second terminal 2 does not support the emergency service transmission, in this case, the first terminal may send both the first ID of the second terminal 1 and the first ID of the second terminal 2 to the network device via the measurement report, use the third indication information to indicate that the second terminal 1 supports the emergency service transmission, and use the fourth indication information to indicate that the second terminal 2 does not support the emergency service transmission.

In summary, the first terminal may only send the first ID of the second terminal supporting the emergency service transmission to the network device, may only send the first ID of the second terminal not supporting the emergency service transmission to the network device, or may send to the network device both the first ID of the second terminal supporting the emergency service transmission and the first ID of the second terminal not supporting the emergency service transmission.

In addition, when sending to the network device both the first ID of the second terminal supporting the emergency service transmission and the first ID of the second terminal not supporting the emergency service transmission, in order to better distinguish between these two types of terminals, the first terminal may also send the third indication information and/or the fourth indication information to the network device.

In some embodiments, in a case of triggering measurement reporting, the first terminal may determine whether to carry the first ID of the second terminal in the measurement report, that is, determine whether to carry the first ID of the second terminal supporting the emergency service transmission and/or the first ID of the second terminal not supporting the emergency service transmission in the measurement report.

In some embodiments, the measurement report may further include an ID of a serving cell accessed by the second terminal, and an SL channel quality between the first terminal and the second terminal, etc. The SL channel quality between the first terminal and the second terminal may be obtained by measuring an SL communication signal or by measuring a discovery signal. There is no explicit limitation herein on the specific method used to measure the SL channel quality.

In some embodiments, the second terminal indicated in the measurement report may satisfy a condition for measurement reporting, where the condition for measurement reporting relates to reporting an event Y1. The event Y1 may be an event where a measurement result of the serving cell accessed by the first terminal is lower than a first threshold, and a measurement result of the second terminal (candidate relay UE) is higher than a second threshold. The measurement result of the serving cell may be RSRP, reference signal received quality (RSRQ), or the like. The measurement result of the second terminal may be obtained by the first terminal measuring the signal sent by the second terminal, and such measurement result may be SL-RSRP, SD-RSRP, or the like.

In some embodiments, the condition for measurement reporting may also relate to an event Y2. The event Y2 may be an event where the measurement result of the second terminal is higher than a third threshold. In the events Y1 and Y2, a relay UE on a frequency indicated by a measurement object may be an applicable candidate relay UE, i.e., may be the second terminal.

In some embodiments, the condition for measurement reporting may also relate to an event Y3. The event Y3 may be an event where the measurement result of a serving relay connected to the first terminal is lower than the first threshold, and the measurement result of the second terminal is higher than the second threshold.

In some embodiments, the condition for measurement reporting may also relate to an event Y4. The event Y4 may be an event where the measurement result of the second terminal is higher than a preset offset value for the measurement result of the serving relay connected to the first terminal. The events Y3 and Y4 may correspond to a handover process between relay UEs.

It should be noted that the first terminal may report the measurement report to the network device periodically. For example, the first terminal may report the measurement report to the network device every 1 minute, and each reported measurement report may carry the first ID of the second terminal.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that the first terminal sends the measurement report to the network device, where the measurement report may include the first ID of the second terminal supporting the emergency service transmission, the third indication information indicating that the second terminal supports the emergency service transmission, the first ID of the second terminal not supporting the emergency service transmission, and/or the fourth indication information indicating that the second terminal does not support the emergency service transmission, etc. This allows the network device to know which second terminals support the emergency service and which second terminals do not support the emergence service, thereby improving the success rate of the emergency service transmission.

FIG. 9 is a flowchart illustrating a relay selection method according to yet other embodiments. As shown in FIG. 9, the relay selection method may be performed by a first terminal and includes the following steps.

In step S810, there is an emergency service to be transmitted from the first terminal, and it is determined whether a second terminal supports transmitting data of a first service.

As an example, in a case where the first terminal determines that there is the emergency service to be transmitted from the first terminal, the first terminal determines whether the second terminal supports transmitting the data of the first service. In other words, there is the emergency service to be transmitted from the first terminal, which determines whether the second terminal supports the emergency service transmission.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that when the first terminal determines that there is the emergency service to be transmitted, the first terminal determines whether the second terminal supports transmitting the data of the first service, so as to improve the accuracy of the relay selection.

FIG. 10 is a flowchart illustrating a relay selection method according to some embodiments. As shown in FIG. 10, the relay selection method may be performed by a second terminal and includes the following steps.

In step S910, a first indication information is sent to a first terminal.

As an example, the second terminal may send the first indication information to the first terminal during a process of establishing relay communication or after the relay communication is established.

As known from the above introduction, the second terminal may be a relay UE, and the second terminal may send the first indication information to the first terminal, where the first terminal may be a remote UE in relay connection with the second terminal, and there may be an emergency service to be transmitted from the remote UE.

In addition, the first indication information may directly indicate whether the second terminal supports transmitting the data of the first service. The first service may be the emergency service.

As known from the above introduction, the first indication information may be carried in a discovery message or a DCR message.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that the second terminal may send the first indication information to the first terminal, where the first indication information may be used to assist the first terminal in determining whether the second terminal supports transmitting the data of the first service, in which the first service may be the emergency service. This may improve the success rate of emergency service transmission.

FIG. 11 is a flowchart illustrating a relay selection method according to other embodiments. As shown in FIG. 11, the relay selection method may be performed by a second terminal and includes the following steps.

In step S1010, first indication information is sent to a first terminal, where the first indication information indicates that the second terminal does not support emergency service transmission.

As an example, the second terminal may send the first indication information to the first terminal, where the first indication information indicates that the second terminal does not support the emergency service transmission. In this case, the second terminal may satisfy a first preset condition.

Specifically, when it is determined that the second terminal is in a limited-service state, it is determined that the second terminal satisfies the first preset condition. The limited-service state may be a special service state of a terminal in a mobile communication network. In the limited-service state, the terminal may only make an emergency calls (e.g., call a security department for help in case of distress) and cannot make a normal call or perform a normal data service.

In some embodiments, when it is determined that a serving cell accessed by the second terminal does not support the emergency service, it is determined that the second terminal satisfies the first preset condition. An indication that the serving cell does not support the emergency service is indicated by the serving cell. For example, the serving cell accessed by the second terminal may indicate whether the serving cell supports the emergency service transmission in a system information block (SIB) and/or a radio resource control (RRC) reconfiguration message.

In some embodiments, when it is determined that the second terminal is engaged in the emergency service, it is determined that the second terminal satisfies the first preset condition. For example, when it is determined that the second terminal is engaged in an emergency call service at the current moment, it is determined that the second terminal is engaged in the emergency service.

In some embodiments, when it is determined that the second terminal does not support the emergency service transmission, it is determined that the second terminal satisfies the first preset condition. The second terminal not supporting the emergency service transmission may mean that the second terminal does not have a capability for the emergency service transmission, i.e., the second terminal cannot perform the emergency service transmission.

The first indication information may be sent to the first terminal when at least one of the above multiple first preset conditions is satisfied. That is, the above multiple first preset conditions may be used independently or in combination. For example, when it is determined that the serving cell accessed by the second terminal does not support the emergency services and that the second terminal is engaged in the emergency service, it is determined that the second terminal satisfies the first preset condition. There is no explicit limitation herein on how many of the first preset conditions are combined to determine whether to send the first indication information to the first terminal, and the combination may be selected according to actual circumstances.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that specify that the second terminal may send the first indication information to the first terminal, in which the first indication information may indicate that the second terminal does not support the emergency service transmission, which may avoid the failure of the emergency service transmission.

FIG. 12 is a flowchart illustrating a relay selection method according to some embodiments. As shown in FIG. 12, the relay selection method may be performed by a second terminal and includes the following steps.

In step S 1110, a first indication information is sent to a first terminal, in which the first indication information indicates that the second terminal supports emergency service transmission.

As an example, the second terminal may send the first indication information to the first terminal, in which the first indication information indicates that the second terminal supports the emergency service transmission. In this case, the second terminal may satisfy a second preset condition.

Specifically, when it is determined that the second terminal is not a limited-service state, it is determined that the second terminal satisfies the second preset condition. The limited-service state may be a special service state of a terminal in a mobile communication network. In the limited-service state, the terminal may only perform an emergency call.

In some embodiments, when it is determined that a serving cell accessed by the second terminal supports the emergency service, it is determined that the second terminal satisfies the second preset condition. An indication that the serving cell supports the emergency services may be indicated by the serving cell. For example, the serving cell accessed by the second terminal may indicate that the serving cell supports the emergency service transmission in the SIB.

In some embodiments, when it is determined that the second terminal is not engaged in the emergency service, it is determined that the second terminal satisfies the second preset condition.

In some embodiments, when it is determined that the second terminal supports the emergency service transmission, it is determined that the second terminal satisfies the second preset condition. The second terminal supporting the emergency service transmission may mean that the second terminal has the capability for emergency service transmission, i.e., the second terminal is able to perform the emergency service transmission.

The first indication information may be sent to the first terminal when at least one of the above multiple second preset conditions is satisfied. That is, the above multiple second preset conditions may be used independently or in combination. For example, when it is determined that the serving cell accessed by the second terminal supports the emergency services and that the second terminal is not engaged in the emergency service, it is determined that the second terminal satisfies the second preset condition. There is no explicit limitation herein on how many of the second preset conditions are combined to determine whether to send the first indication information to the first terminal, and the combination may be selected according to actual circumstances.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that specify that the second terminal may send the first indication information to the first terminal, in which the first indication information may indicate that the second terminal supports the emergency service transmission, which may ensure the success of the emergency service transmission.

FIG. 13 is a flowchart illustrating a relay selection method according to other embodiments. As shown in FIG. 13, the relay selection method may be performed by a second terminal and includes the following steps.

In step S1210, a first ID of the second terminal is acquired, and it is determined, according to the first ID, whether to send first indication information to a first terminal.

As known from the above description, the first ID of the second terminal may be an SL ID. Before sending the first indication information to the first terminal, embodiments of the disclosure may acquire the first ID of the second terminal and determine, according to the first ID, whether to send the first indication information to the first terminal. In other words, embodiments of the disclosure may determine the first indication information via the first ID of the second terminal. When the first IDs are different, the corresponding first indication information to be sent may also be different.

In some embodiments, when it is determined that the first ID is within a first range, the second terminal may send to the first terminal the first indication information for indicating that the second terminal supports the emergency service transmission. In some embodiments, when it is determined that the first ID is within a second range, the second terminal may send to the first terminal the first indication information for indicating that the second terminal does not support the emergency service transmission. In addition, the second terminal may also determine, based on service data, whether the second terminal supports the emergency service transmission.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that the second terminal may determine, according to the acquired first ID, whether to send the first indication information to the first terminal, which may ensure an accuracy of sending the first indication information, thereby improving the success rate of emergency service transmission.

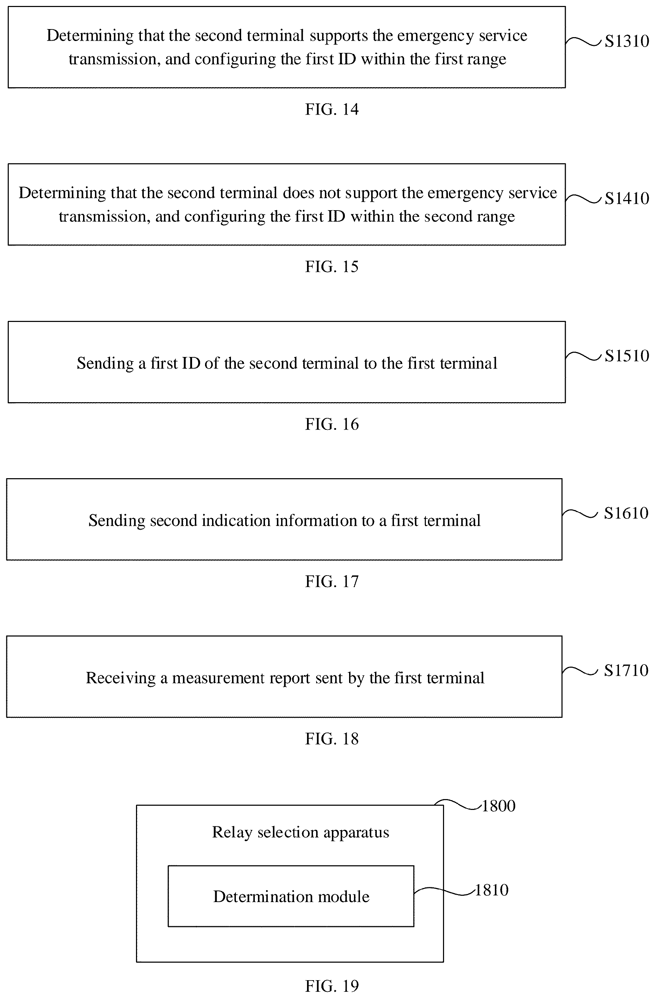

FIG. 14 is a flowchart illustrating a relay selection method according to further embodiments. As shown in FIG. 14, the relay selection method may be performed by a second terminal and includes the following steps.

In step S1310, it is determined that the second terminal supports emergency service transmission, and a first ID of the second terminal is configured within a first range.

In some embodiments, in a case of determining that the second terminal supports the emergency service transmission, the first ID is configured within the first range. On this basis, the second terminal may obtain first indication information based on the first ID, and may also send the first ID to the first terminal. As known from the above description, the first range may be predefined by a protocol and/or being sent by a network device.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that the second terminal may configure the first ID within the first range in the case of determining that the second terminal supports the emergency service transmission, which may enable quick and effective determination of whether the second terminal supports the emergency service transmission.

FIG. 15 is a flowchart illustrating a relay selection method according to further embodiments. As shown in FIG. 15, the relay selection method may be performed by a second terminal and includes the following steps.

In step S1410, it is determined that the second terminal does not support emergency service transmission, and a first ID of the second terminal is configured within a second range.

In some embodiments, in a case of determining that the second terminal does not support the emergency service transmission, the first ID is configured within the second range. On this basis, the second terminal may obtain first indication information based on the first ID, and may also send the first ID to the first terminal. As known from the above description, the second range may be predefined by a protocol and/or being sent by a network device.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that the second terminal may configure the first ID within the second range in the case of determining that the second terminal does not support the emergency service transmission, which may enable quick and effective determination of whether the second terminal supports the emergency service transmission.

FIG. 16 is a flowchart illustrating a relay selection method according to further embodiments. As shown in FIG. 16, the relay selection method may be performed by a second terminal and includes the following steps.

In step S1510, a first ID of the second terminal is sent to a first terminal.

In the embodiments of the disclosure, the second terminal may send the first ID to the first terminal to indicate the first terminal to determine, based on the first ID, whether the second terminal supports emergency service transmission. The specific method of determining, based on the first ID, whether the second terminal supports the emergency service transmission has been described in detail in the foregoing embodiments, and will not be repeated here.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that the second terminal may send the first ID to the first terminal to indicate the first terminal to determine, based on the first ID, whether the second terminal supports the emergency service transmission, thereby improving the accuracy of relay device selection.

FIG. 17 is a flowchart illustrating a relay selection method according to some embodiments. As shown in FIG. 17, the relay selection method may be performed by a network device and includes the following steps.

In step S1610, second indication information is sent to a first terminal.

In the embodiments of the disclosure, the network device may send the second indication information to the first terminal, in which the second indication information may indicate the first terminal to determine whether to send to the network device a first ID of a second terminal not supporting emergency service transmission.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that the network device may send the second indication information to the first terminal to indicate the first terminal to determine whether to send to the network device the first ID of the second terminal not supporting the emergency service transmission, which may avoid the failure of emergency service transmission.

FIG. 18 is a flowchart illustrating a relay selection method according to other embodiments. As shown in FIG. 18, the relay selection method may be performed by a network device and includes the following steps.

In step S1710, a measurement report sent by a first terminal is received.

In some embodiments, the network device may receive the measurement report sent by the first terminal, in which the measurement report may include a first ID of the second terminal supporting emergency service transmission. In some embodiments, the measurement report may further include third indication information, and the third indication information may indicate that the second terminal supports the emergency service transmission.

In some embodiments, the measurement report may further include the first ID of the second terminal not supporting the emergency service transmission and fourth indication information indicating that the second terminal does not support the emergency service transmission.

In other embodiments, the network device may receive the measurement report sent by the first terminal, in which the measurement report may not include the first ID of the second terminal not supporting the emergency service transmission.

In the embodiments of the disclosure, the second terminal indicated in the measurement report may satisfy a condition for measurement reporting, wherein for the condition for measurement reporting reference is made to the descriptions in the foregoing embodiments and details will not be repeated here.

It should be noted that for multiple embodiments or features separated by "or", even if some of the features are not implementable, it will not affect other solutions. In addition, in a case where there is no contradiction, the embodiments of the disclosure may be combined with other embodiments, implementations and various optional solutions involved in the relay selection method, which will not be repeated here.

Embodiments of the disclosure specify that the network device may receive the measurement report sent by the first terminal, and based on the measurement report, the network device may learn whether the second terminal supports the emergency service transmission, thereby determining whether to establish a connection with the second terminal, which may ensure the reliability of emergency service transmission.

The disclosure further provides a relay selection system, which may include a first terminal, a second terminal, and a network device. The first terminal may be referred to as a remote UE, and the second terminal may be referred to as a relay UE. The first terminal may be configured to perform the operations related to the first terminal in the foregoing embodiments, the second terminal may be configured to perform the operations related to the second terminal in the foregoing embodiments, and the network device may be configured to perform the operations related to the network device in the foregoing embodiments.

FIG. 19 is a block diagram of a relay selection apparatus 1800 according to some embodiments. Referring to FIG. 19, the relay selection apparatus 1800 is applied to a first terminal, and may include a determination module 1810.

The determination module 1810 is configured to determine whether a second terminal supports transmitting data of a first service, in which the first service is an emergency service, and the second terminal is a relay UE in relay connection with the first terminal.

In some embodiments, the determination module 1810 may include:
a first information receiving sub-module, configured to receive first indication information sent by the second terminal; and
a determination sub-module, configured to determine, according to the first indication information, whether the second terminal supports transmitting the data of the first service.

In some embodiments, the determination module 1810 may further include:
a first ID receiving sub-module, configured to receive a first ID sent by the second terminal;
the determination sub-module, further configured to determine, according to the first ID, whether the second terminal supports transmitting the data of the first service.

In some embodiments, the determination module 1810 may further include:
a range determination sub-module, configured to determine whether the first identifier belongs to a first range or whether the first ID belongs to a second range;
in which the determination sub-module is further configured to: in a case where it is determined that the first ID belongs to the first range, determine that the second terminal supports transmitting the data of the first service; and in a case where it is determined that the first ID belongs to the second range, determine that the second terminal does not support transmitting the data of the first service.

In some embodiments, the first range or the second range is determined by at least one of the following means:
being predefined by a protocol; or
being sent by a network device.

In some embodiments, the relay selection apparatus 1800 may further include:
a second information receiving module, configured to receive second indication information from a network device;
in which the determination module is further configured to determine, according to the second indication information, whether to send to the network device a first ID of the second terminal not supporting emergency service transmission.

In some embodiments, the relay selection apparatus 1800 may further include:
a measurement report sending module, configured to send a measurement report to the network device, in which the measurement report comprises a first ID of the second terminal supporting emergency service transmission.

In some embodiments, the measurement report further includes third indication information, and the third indication information indicates that the second terminal supports the emergency service transmission.

In some embodiments, the measurement report further includes the first ID of the second terminal not supporting the emergency service transmission and fourth indication information indicating that the second terminal does not support the emergency service transmission.

In some embodiments, the measurement report sending module is further configured to send a measurement report to the network device, in which the measurement report does not comprise a first ID of the second terminal not supporting emergency service transmission.

In some embodiments, the second terminal indicated in the measurement report satisfies a condition for measurement reporting.

In some embodiments, there is the emergency service that needs to be transmitted by the first terminal.

Embodiments of the disclosure specify that the first terminal may determine whether the second terminal supports transmitting the data of the first service, in which the first service may be the emergency service. This may avoid the failure of emergency service transmission, thereby improving the success rate of the emergency service transmission.

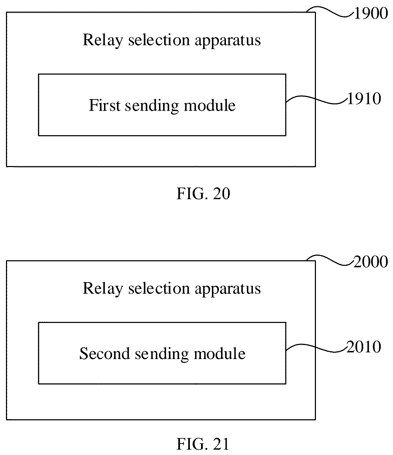

FIG. 20 is a block diagram of a relay selection apparatus 1900 according to some embodiments. Referring to FIG. 20, the relay selection apparatus 1900 is applied to a second terminal, and may include a first sending module 1910.

The first sending module 1910 is configured to send first indication information to the first terminal, in which the first indication information is used to determine whether the second terminal supports transmitting data of a first service, the first service is an emergency service, and the first terminal is a remote UE in relay connection with the second terminal.

In some embodiments, the first sending module 1910 may be configured to send the first indication information to the first terminal, in which the first indication information indicates that the second terminal does not support emergency service transmission, and the second terminal satisfies a first preset condition.

In some embodiments, the first preset condition includes at least one of:
the second terminal being in a limited-service state;
the second terminal determining that a serving cell accessed by the second terminal does not support the emergency service, and an indication that the serving cell does not support the emergency service is indicated by the serving cell;
the second terminal being engaged in the emergency service; or
the second terminal not supporting the emergency service transmission.

In some embodiments, the first sending module 1910 may be configured to send the first indication information to the first terminal, in which the first indication information indicates that the second terminal supports emergency service transmission, and the second terminal satisfies a second preset condition.

In some embodiments, the second preset condition includes at least one of:
the second terminal being not in a limited-service state;
the second terminal determining that a serving cell accessed by the second terminal supports the emergency service, and an indication that the serving cell supports the emergency service is indicated by the serving cell;
the second terminal being not engaged in the emergency service; or
the second terminal supporting the emergency service transmission.

In some embodiments, the first sending module 1910 may be configured to acquire a first ID of the second terminal and determine, according to the first ID, whether to send the first indication information to the first terminal.

In some embodiments, the second terminal supports emergency service transmission, and the first ID is within a first range; or the second terminal does not support emergency service transmission, and the first ID is within a second range.

In some embodiments, the relay selection apparatus 1900 further includes:
a configuration module configured to: determine that the second terminal supports the emergency service transmission and configure the first ID within the first range; or determine that the second terminal does not support the emergency service transmission and configure the first ID within the second range.

In some embodiments, the first range or the second range is determined by at least one of the following means:
being predefined by a protocol; or
being sent by a network device.

In some embodiments, the first indication information is carried in one of:
a discovery message; and
a direct communication request.

In some embodiments, the relay selection apparatus 1900 further includes:
an ID sending module configured to send a first ID of the second terminal to the first terminal, in which the first ID is used to determine whether the second terminal supports transmitting data of the first service.

Embodiments of the disclosure specify that the second terminal may send first indication information to the first terminal, in which the first indication information may be used to assist the first terminal in determining whether the second terminal supports transmitting data of the first service (where the first service may be the emergency service), which may improve the success rate of emergency service transmission.

FIG. 21 is a block diagram of a relay selection terminal 2000 according to some embodiments. Referring to FIG. 21, the relay selection terminal 2000 is applied to a network device and may include a second sending module 2010.

The second sending module 2010 may be configured to send second indication information to a first terminal, in which the second indication information is used for the first terminal to determine whether to send to the network device a first ID of a second terminal not supporting emergency service transmission.

In some embodiments, the relay selection terminal 2000 may further include:
a report receiving module configured to receive the measurement report sent by the first terminal, in which the measurement report comprises the first ID of the second terminal supporting the emergency service transmission.

In some embodiments, the measurement report further comprises third indication information, and the third indication information indicates that the second terminal supports the emergency service transmission.

In some embodiments, the measurement report further comprises the first ID of the second terminal not supporting the emergency service transmission and fourth indication information indicating that the second terminal does not support the emergency service transmission.

In some embodiments, the report receiving module is further configured to receive the measurement report sent by the first terminal, in which the measurement report does not comprise the first ID of the second terminal not supporting the emergency service transmission.

In some embodiments, the second terminal indicated in the measurement report satisfies a condition for measurement reporting.

Embodiments of the disclosure specify that the network device may send second indication information to the first terminal to indicate the first terminal to determine whether to send the first ID of the second terminal not supporting the emergency service transmission to the network device, which may avoid the failure of emergency service transmission.

Regarding the apparatus in the above embodiments, the specific manner in which each module performs operations has been described in detail in the embodiments related to the method, and will not be elaborated here.

The disclosure further provides a computer-readable storage medium, on which computer program instructions are stored, and when the program instructions are executed by a processor, the steps of the relay selection method provided by the disclosure are implemented.

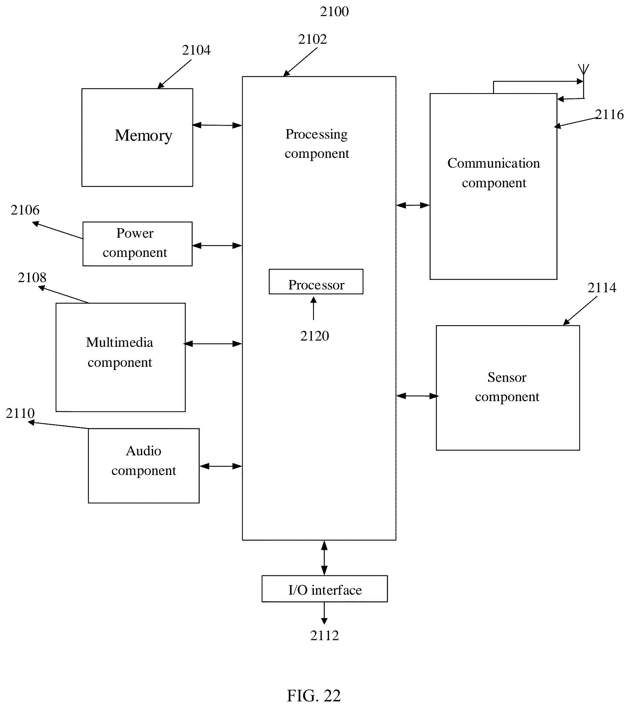

FIG. 22 is a block diagram of a terminal according to some embodiments. For example, the terminal 2100 may be may be a mobile phone, a computer, a digital broadcasting terminal, a message receiving and sending device, a game console, a tablet device, a medical device, a fitness device, a personal digital assistant, and the like.

Referring to FIG. 22, the terminal 2100 may include one or more of the following components: a processing component 2102, a first memory 2104, a power supply component 2106, a multimedia component 2108, an audio component 2110, an input/output (I/O) interface 2112, a sensor component 2114, and a communication component 2116.

The processing component 2102 typically controls overall operations of the terminal 2000, such as the operations associated with display, telephone calls, data communications, camera operations, and recording operations. The processing component 2102 may include one or more processors 2120 to perform all or part of the steps in the above described methods. Moreover, the processing component 2102 may include one or more modules which facilitate the interaction between the processing component 2102 and other components. For example, the processing component 2102 may include a multimedia module to facilitate the interaction between the multimedia component 2108 and the processing component 2102.

The first memory 2104 is configured to store various types of data to support the operation of the terminal 2100. Examples of such data include instructions for any applications or methods operated on the terminal 2100, contact data, phonebook data, messages, pictures, video, etc. The first memory 2104 may be implemented using any type of volatile or non-volatile memory devices, or a combination thereof, such as a static random-access memory (SRAM), an electrically-erasable programmable read only memory (EEPROM), an erasable programmable read only memory (EPROM), a programmable read only memory (PROM), a read only memory (ROM), a magnetic memory, a flash memory, a magnetic or optical disk.

The power component 2106 provides power to various components of the terminal 2100. The power component 2106 may include a power management system, one or more power sources, and any other components associated with the generation, management, and distribution of power in the terminal 2100.

The multimedia component 2108 includes a touch screen providing an output interface between the terminal 2100 and the user. In some embodiments, the screen may include a liquid crystal display (LCD) and a touch panel (TP). The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 2108 includes a front-facing camera and/or a rear-facing camera. When the terminal 2100 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 2110 is configured to output and/or input audio signals. For example, the audio component 2110 includes a microphone (MIC) configured to receive an external audio signal when the terminal 2100 is in an operation mode, such as a call mode, a recording mode, and a voice recognition mode. The received audio signal may be further stored in the memory 2104 or transmitted via the communication component 2116. In some embodiments, the audio component 2110 further includes a speaker to output audio signals.

The I/O interface 2112 provides an interface between the processing component 2102 and peripheral interface modules, such as a keyboard, a click wheel, buttons, and the like. The buttons may include, but are not limited to, a home button, a volume button, a starting button, and a locking button.

The sensor component 2114 includes one or more sensors to provide status assessments of various aspects of the terminal 2100. For instance, the sensor component 2114 may detect an open/closed status of the terminal 2100, relative positioning of components, e.g., the display and the keypad, of the terminal 2100, a change in position of the terminal 2100 or a component of the terminal 2100, a presence or absence of user contact with the terminal 2100, an orientation or an acceleration/deceleration of the terminal 2100, and a change in temperature of the terminal 2100. The sensor component 2114 may include a proximity sensor configured to detect the presence of nearby objects without any physical contact. The sensor component 2114 may also include a light sensor, such as a complementary metal oxide semiconductor (CMOS) or charge-coupled device (CCD) image sensor, for use in imaging applications. In some embodiments, the sensor component 2114 may also include an accelerometer sensor, a gyroscope sensor, a magnetic sensor, a pressure sensor, or a temperature sensor.

The communication component 2116 is configured to facilitate communication, wired or wirelessly, between the terminal 2100 and other devices. The terminal 2100 may access a wireless network based on a communication standard, such as Wi-Fi, 2G or 3G, or a combination thereof. In an exemplary embodiment, the communication component 2116 receives a broadcast signal or broadcast associated information from an external broadcast management system via a broadcast channel. In an exemplary embodiment, the communication component 2116 further includes a near field communication (NFC) module to facilitate short-range communication. For example, the NFC module may be implemented based on a radio frequency identification (RFID) technology, an infrared data association (IrDA) technology, an ultra-wide band (UWB) technology, a blue tooth (BT) technology, and other technologies.

In some exemplary embodiments, the terminal 2100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In an embodiment, there is also provided a non-transitory computer-readable storage medium containing instructions, such as the memory 2104 including instructions, where the above-mentioned instructions may be executed by the processor 2120 of the terminal 2100 to implement the above-mentioned method. For example, the storage medium may be a read-only memory (ROM), a random access memory (RAM), compact disc-ROM (CD-ROM), a magnetic tape, a floppy disk, an optical data storage device, etc.

In addition to being an independent electronic device, the aforementioned apparatus may also be a part of an independent electronic device. For example, in some embodiments, the apparatus may be an integrated circuit (IC) or a chip. The IC may be a single IC or a collection of multiple ICs; the chip may include, but is not limited to, the following types: graphics processing unit (GPU), central processing unit (CPU), field programmable gate array (FPGA), digital signal processor (DSP), application specific integrated circuit (ASIC), system on chip (SoC) and the like. The aforementioned IC or chip may be configured to execute executable instructions (or code) to implement the aforementioned relay selection method. The executable instructions may be stored in the IC or chip, or may be obtained from other apparatuses or devices. For instance, the IC or chip includes a processor, a memory, and an interface for communicating with other apparatuses. The executable instructions may be stored in the memory, and when executed by the processor, implement the aforementioned relay selection method. Alternatively, the IC or chip may receive the executable instructions through the interface and transmit the executable instructions to the processor for execution, so as to implement the aforementioned relay selection method.

In some embodiments, a computer program product is further provided. The computer program product includes a computer program executable by a programmable apparatus, and the computer program has a code part for executing the aforementioned relay selection method when executed by the programmable apparatus.

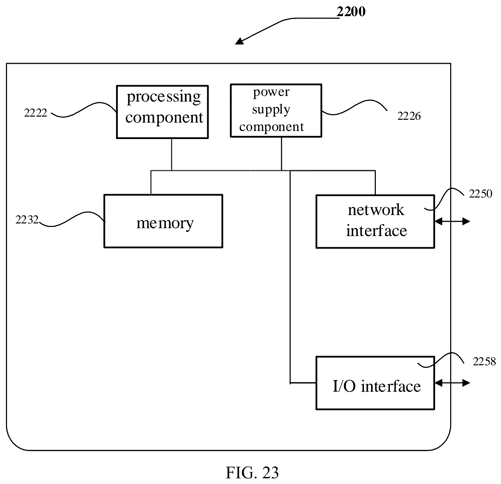

FIG. 23 is a block diagram of a network device according to an embodiment. For example, the network device 2200 may be provided as a server. Referring to FIG. 23, the network device 2200 includes a processing component 2222, which further includes one or more processors, and a memory resource represented by a memory 2232 for storing instructions executable by the processing component 2222, such as application programs. The application programs stored in the memory 2232 may include one or more modules, each corresponding to a set of instructions. In addition, the processing component 2222 is configured to execute the instructions to implement the relay selection method.

The network device 2200 may further include a power supply component 2226 configured to perform power management of the network device 2200, a wired or wireless network interface 2250 configured to connect the network device 2200 to a network, and an I/O interface 2258. The network device 2200 may operate based on an operating system stored in the memory 2232, such as Windows Server^{™}, Mac OS X^{™}, Unix^{™}, Linux^{™}, FreeBSD^{™} or the like.

Other embodiments of the disclosure will be apparent to those skilled in the art from consideration of the specification and practice of the disclosure disclosed here. This application is intended to cover any variations, uses, or adaptations of the disclosure following the general principles thereof and including common general knowledge or conventional technical means in the technical field that are not disclosed in the present disclosure. It is intended that the specification and examples are considered as illustrative only, with a true scope and spirit of the disclosure being indicated by the following claims.

It should be understood that the embodiments of the disclosure are not limited to the precise structures that have been described above and shown in the accompanying drawings, and various modifications and changes may be made without departing from their scope. The scope of the embodiments of the disclosure is limited only by the appended claims.

## Claims

1. A relay selection method, performed by a first terminal, comprising:
determining whether a second terminal supports transmitting data of a first service, wherein the first service is an emergency service, and the second terminal is a relay user equipment (UE) in relay connection with the first terminal.

2. The relay selection method according to claim 1, wherein determining whether the second terminal supports transmitting the data of the first service comprises:
receiving first indication information sent by the second terminal; and
determining, according to the first indication information, whether the second terminal supports transmitting the data of the first service.

3. The relay selection method according to claim 1 or 2, wherein determining whether the second terminal supports transmitting data of the first service comprises:
receiving a first identifier (ID) sent by the second terminal; and
determining, according to the first ID, whether the second terminal supports transmitting the data of the first service.

4. The relay selection method according to claim 3, wherein determining, according to the first ID, whether the second terminal supports transmitting the data of the first service comprises:
determining whether the first ID belongs to a first range or whether the first ID belongs to a second range;
in a case where it is determined that the first ID belongs to the first range, determining that the second terminal supports transmitting the data of the first service; and
in a case where it is determined that the first ID belongs to the second range, determining that the second terminal does not support transmitting the data of the first service.

5. The relay selection method according to claim 4, wherein the first range or the second range is determined by at least one of the following means:
being predefined by a protocol; or
being sent by a network device.

6. The relay selection method according to any one of claims 1 to 5, further comprising:
receiving second indication information from a network device; and
determining, according to the second indication information, whether to send to the network device a first ID of the second terminal not supporting emergency service transmission.

7. The relay selection method according to any one of claims 1 to 5, further comprising:
sending a measurement report to a network device, wherein the measurement report comprises a first ID of the second terminal supporting emergency service transmission.

8. The relay selection method according to claim 7, wherein the measurement report further comprises third indication information, and the third indication information indicates that the second terminal supports the emergency service transmission.

9. The relay selection method according to claim 7, wherein the measurement report further comprises the first ID of the second terminal not supporting the emergency service transmission and fourth indication information indicating that the second terminal does not support the emergency service transmission.

10. The relay selection method according to any one of claims 1 to 5, further comprising:
sending a measurement report to a network device, wherein the measurement report does not comprise a first ID of the second terminal not supporting emergency service transmission.

11. The relay selection method according to any one of claims 7 to 10, wherein the second terminal indicated in the measurement report satisfies a condition for measurement reporting.

12. The relay selection method according to any one of claims 1 to 10, wherein there is the emergency service that needs to be transmitted by the first terminal.

13. A relay selection method, performed by a second terminal, comprising:
sending first indication information to a first terminal, wherein the first indication information is used to determine whether the second terminal supports transmitting data of a first service, the first service is an emergency service, and the first terminal is a remote user equipment (UE) in relay connection with the second terminal.

14. The relay selection method according to claim 13, wherein sending the first indication information to the first terminal comprises:
sending the first indication information to the first terminal, wherein the first indication information indicates that the second terminal does not support emergency service transmission, and the second terminal satisfies a first preset condition.

15. The relay selection method according to claim 14, wherein the first preset condition comprises at least one of:
the second terminal being in a limited-service state;
the second terminal determining that a serving cell accessed by the second terminal does not support the emergency service, and an indication that the serving cell does not support the emergency service is indicated by the serving cell;
the second terminal being engaged in the emergency service; or
the second terminal not supporting the emergency service transmission.

16. The relay selection method according to claim 13, wherein sending the first indication information to the first terminal comprises:
sending the first indication information to the first terminal, wherein the first indication information indicates that the second terminal supports emergency service transmission, and the second terminal satisfies a second preset condition.

17. The relay selection method according to claim 16, wherein the second preset condition comprises at least one of:
the second terminal being not in a limited-service state;
the second terminal determining that a serving cell accessed by the second terminal supports the emergency service, and an indication that the serving cell supports the emergency service is indicated by the serving cell;
the second terminal being not engaged in the emergency service; or
the second terminal supporting the emergency service transmission.

18. The relay selection method according to any one of claims 13 to 17, wherein sending the first indication information to the first terminal comprises:
acquiring a first identifier (ID) of the second terminal, and determining, according to the first ID, whether to send the first indication information to the first terminal.

19. The relay selection method according to claim 18, wherein
the second terminal supports emergency service transmission, and the first ID is within a first range; or
the second terminal does not support emergency service transmission, the first ID is within a second range.

20. The relay selection method according to claim 19, further comprising:
determining that the second terminal supports the emergency service transmission, and configuring the first ID within the first range; or
determining that the second terminal does not support the emergency service transmission, and configuring the first ID within the second range.

21. The relay selection method according to claim 19 or 20, wherein the first range or the second range is determined by at least one of the following means:
being predefined by a protocol; or
being sent by a network device.

22. The relay selection method according to any one of claims 14 to 21, wherein the first indication information is carried in one of:
a discovery message; and
a direct communication request.

23. The relay selection method according to any one of claims 13 to 22, further comprising:
sending a first ID of the second terminal to the first terminal, wherein the first ID is used to determine whether the second terminal supports transmitting data of the first service.

24. A relay selection method, performed by a network device, comprising:
sending second indication information to a first terminal, wherein the second indication information is used for the first terminal to determine whether to send to the network device a first identifier (ID) of a second terminal not supporting emergency service transmission.

25. The relay selection method according to claim 24, further comprising:
receiving a measurement report sent by the first terminal, wherein the measurement report comprises the first ID of the second terminal supporting the emergency service transmission.

26. The relay selection method according to claim 25, wherein the measurement report further comprises third indication information, and the third indication information indicates that the second terminal supports the emergency service transmission.

27. The relay selection method according to claim 25 or 26, wherein the measurement report further comprises the first ID of the second terminal not supporting the emergency service transmission and fourth indication information indicating that the second terminal does not support the emergency service transmission.

28. The relay selection method according to claim 24, further comprising:
receiving a measurement report sent by the first terminal, wherein the measurement report does not comprise the first ID of the second terminal not supporting the emergency service transmission.

29. The relay selection method according to any one of claims 25 to 28, wherein the second terminal indicated in the measurement report satisfies a condition for measurement reporting.

30. A relay selection apparatus, comprising:
a determination module, configured to determine whether a second terminal supports transmitting data of a first service, wherein the first service is an emergency service, and the second terminal is a relay user equipment (UE) in relay connection with a first terminal.

31. A relay selection apparatus, comprising:
a first sending module, configured to send first indication information to a first terminal, wherein the first indication information is used to determine whether a second terminal supports transmitting data of a first service, the first service is an emergency service, and the first terminal is a remote user equipment (UE) in relay connection with the second terminal.

32. A relay selection apparatus, comprising:
a second sending module, configured to send second indication information to a first terminal, wherein the second indication information is used to determine whether to send a first identifier (ID) of a second terminal not supporting emergency service transmission to a network device.

33. A terminal, comprising:
a processor; and
a memory for storing executable instructions of the processor;
wherein the processor is configured to execute the executable instructions to implement the relay selection method according to any one of claims 1 to 23.

34. A network device, comprising:
a processor; and
a memory for storing executable instructions of the processor;
wherein the processor is configured to execute the executable instructions to implement the relay selection method according to any one of claims 24 to 29.

35. A computer-readable storage medium having computer program instructions stored thereon, wherein when the computer program instructions are executed by a processor, the steps of the relay selection method according to any one of claims 1 to 29 are implemented.
